# DEMANDE DE BREVET EUROPEEN

(11) **EP 0 652 431 A1**
(43) Date de publication de la demande: **10.05.1995**
(21) Numéro de dépôt: 94430014.4
(22) Date de dépôt: 21.10.1994
(51) Int. Cl.: G01N 21/88, B07C 5/34

(54) **Procédé et dispositif de mesure de caractéristiques physiques d'objets par détermination précise des valeurs de contraste visuel de surface**

(30) Priorité: 05.11.1993 FR 9313534
(71) Demandeur: COPA-INFORMATIQUE, F-13103 Saint Etienne Du Gres (FR)
(72) Inventeur: Pelouzet, Roger, F-13103 Saint Etienne du Gres (FR); Martinez, Antoine, F-30320 Marguerittes (FR)
(74) Mandataire: Somnier, Jean-Louis

(57) **Abrégé**

La présente invention a pour objet un dispositif de mesure de caractéristiques physiques d'objet (2) par détermination des valeurs de contraste visuel de sa surface (6), comprenant un boîtier fermé (1) séparé en deux parties par une plaque translucide (3), et pouvant recevoir ledit objet (2) ; lequel boîtier isole celui-ci de toute lumière parasite extérieure et comporte un fond (7), en arrière dudit objet et de niveau de blanc connu, au moins un dispositif d'éclairage (4) dudit objet (2) et une caméra (5) placée du côté opposé à cet objet (2) par rapport à ladite plaque (3)

Ledit dispositif comporte au moins deux dispositifs d'éclairage, dont l'un (4₂) est placé derrière l'objet (2) par rapport à ladite caméra (5), de telle façon que la surface (6) de l'objet faisant face à celle-ci ne soit pas éclairé, par ce premier dispositif (4₂) et l'autre (4₁) est placé du même côté par rapport à l'objet (2) que la caméra (5), de telle façon qu'il éclaire ladite surface (6) de l'objet, et un dispositif (18) de commande des deux dits éclairages alimentant un seul éclairage en même temps et successivement.

## Description

La présente invention a pour objet un procédé et dispositif de mesure de caractéristiques physiques d'objet par détermination précise des valeurs de contraste visuel de sa surface.

Le secteur technique de l'invention est le domaine de la réalisation d'appareils de mesure des caractéristiques physiques d'objets utilisant l'analyse d'une image acquise de ces objets éclairés.

Une des applications principales de l'invention est l'évaluation du niveau de maturité d'un fruit ou d'un légume par détermination des valeurs de contraste visuel de la surface d'une partie interne coupée de celui-ci : cette surface est éclairée et relevée optiquement pour comparer ses valeurs de contraste à celles d'une carte de référence. En particulier, on connaît pour les pommes la méthode dite du "test-iode" utilisant la réaction chimique de l'amidon en présence d'une solution à base de produit iodé, comprenant en général 1% d'iode et 4% d'iodure de potassium ; en étalant ce produit sur toute la surface d'une pomme coupée, celle-ci se fonce plus ou moins en bleu, suivant la quantité d'amidon, qui est un des constituants du fruit vert : cette quantité est liée à son taux de régression, et donc d'une manière parfaitement corrélée avec son niveau de maturité ; en effet, l'amidon est hydrolysé en sucres solubles au fur et à mesure de l'évolution de la maturité de la pomme : un fruit immature, dont la coupe est badigeonnée avec une solution iodée, présente une surface entièrement bleue ; les tests ultérieurs effectués pendant la phase de maturation font apparaître des plages qui ne réagissent plus à l'iode et qui demeurent blanches : une pomme trop mûre ne réagira plus à la solution et restera entièrement blanche.

On peut ainsi très bien évaluer le degré de la maturité d'une pomme par analyse visuelle de la surface qui s'est colorée en rapport de la surface non colorée : si cette analyse est effectuée par l'oeil d'un spécialiste, il y a toujours cependant une imprécision liée à la subjectivité de l'interprétation car la zone de séparation entre la zone foncée qui s'est colorée et celle qui est restée claire, est souvent peu nette et d'un profil en dents de scie pouvant tromper l'appréciation du rapport de surface que l'on veut connaître.

Il s'est alors développé depuis quelques temps des systèmes de mesure automatique par acquisition d'images, à partir de prise de vue par caméra vidéo, puis de traitement de ces images en comptant le nombre des points matriciels images de celles-ci, ou pixels, en fonction des niveaux de blanc de chacun, suivant une échelle de référence connue entre zéro, qui est le noir absolu, et 256 qui est le blanc pur : on obtient ainsi un histogramme de contraste de la surface considérée. Pour l'application ci-dessus et pour d'autres déterminations de même type pour des mesures d'autres caractéristiques physiques d'objets, autres éventuellement que les fruits tels que la pomme, on peut alors définir un premier seuil sur l'échelle, de référence blanc/noir au-dessous duquel on considère que les points ou pixels relevés sont représentatifs d'une surface noire ou colorée, et un deuxième au-dessus duquel les pixels correspondent à une surface blanche ou non colorée.

L'intégration de la courbe de l'histogramme par rapport à ces deux seuils, en éliminant la portion de courbe située entre ceux-ci pour éliminer les gris douteux, donne alors les deux valeurs de surfaces recherchées et donc permet de déterminer la caractéristique de contraste recherché, soit dans le cas de la recherche de maturité des pommes le taux de régression de l'amidon.

Différents équipements ont été développés suivant ce principe, en particulier en disposant le fruit ou légume tel que la pomme dans une boîte fermée sur ou sous une plaque translucide, et en avant d'un fond blanc : on éclaire alors la surface du fruit en contact avec ladite plaque, et on saisit l'image de cette surface par une caméra, de type connu dit CCD, qui capte ladite image suivant une matrice de points images dit pixels, et qui est située face à cette surface, du côté opposé à la plaque translucide par rapport au fond blanc.

Cependant, plusieurs problèmes perturbent la fiabilité et les résultats obtenus lors de l'analyse de cette image suivant le principe de mesures de surface par histogramme de contraste tel que défini précédemment.

En effet, il se pose d'abord le problème du positionnement de l'objet par rapport à la plaque sur laquelle il est posé quand cet objet est d'une couleur voisine de celle du fond devant lequel il est disposé : on peut alors saisir par erreur des surfaces qui n'appartiennent pas l'objet, mais qui seront pris en compte dans la mesure ou réciproquement, on peut ne pas tenir compte de certaines parties de cette surface, car se confondant avec le fond.

Par ailleurs, se pose le problème de l'homogénéité de l'éclairage, dans le temps, d'un appareil à l'autre, et en fonction du type d'objets et de l'orientation de celui-ci par rapport à la plaque sur laquelle il est posé, ce qui peut créer des divergences dans les mesures et un manque de répétitivité de résultats.

Un autre problème est également celui de la qualité du contraste par rapport audit éclairage, de l'orientation de l'objet et du contraste de l'objet lui-même par rapport au fond ; en effet si on veut bien positionner et déterminer le contour de l'objet par rapport à celui-ci, comme indiqué ci-dessus, il faut diminuer le contraste, mais alors on perd de la qualité sur l'image de l'objet et on a du mal à faire un bon rapport des surfaces entre les blancs et les noirs, puisqu'on augmente alors les gris : on obtient un histogramme en forme de cloche, dont la partie centrale est importante et doit être éliminée pour les mesures, car représentative des gris, ce qui affecte énormément la fiabilité de la valeur du rapport de surfaces et donc du contraste pour la mesure recherchée.

En effet, c'est le contraste qui donne la qualité de la mesure, mais à l'inverse, si on augmente celui-ci, on a alors du mal à positionner et déterminer le contour de l'objet, comme déjà analysé ci-dessus.

Enfin, un autre problème est celui de la consommation électrique qu'il faut pouvoir réduire pour obtenir des dispositifs transportables, nécessitant le minimum de stockage d'énergie pour cela.

Ces différents problèmes sont très importants à pouvoir être solutionnés pour obtenir une mesure fiable, car c'est le résultat de celle-ci qui permet de sélectionner des lots de fruits et de légumes, en particulier tels que les pommes, pour lesquelles il est effectué par exemple un prélèvement de l'ordre d'une trentaine d'unités pour des lots de 10 à 50 tonnes : ces échantillons sont coupés et testés suivant l'analyse ci-dessus, à partir de laquelle on détermine la classe de maturité dudit lot que l'on peut alors gérer en fonction de sa destination ; il est évident alors qu'une erreur de classification par une mauvaise interprétation des mesures sur le peu de pommes analysées par rapport aux lots dont elles sont extraites, peut représenter une perte importante sur ceux-ci.

Une solution aux problèmes posés est un procédé de mesure de caractéristiques physiques d'objet par détermination des valeurs de contraste visuel de sa surface, lequel objet étant disposé dans un boîtier fermé isolant celui-ci de toute lumière parasite extérieure, en avant d'un fond de niveau de blanc connu, et contre une plaque translucide, lequel boîtier comporte au moins un dispositif d'éclairage dudit objet et une caméra placée du côté opposé à cet objet par rapport à ladite plaque ; suivant le procédé de l'invention :
- on éclaire l'objet par tout dispositif d'éclairage placé derrière celui-ci par rapport à ladite caméra, de telle façon que la surface de l'objet faisant face à celle-ci, ne soit pas éclairée ;
- on analyse l'image complète saisie par ladite caméra, du fond et de la surface de l'objet à travers ladite plaque, par comparaison de la valeur du niveau de gris de tout pixel de l'image par rapport à celui du fond connu, et on détermine le contour exact de cette surface que l'on met en mémoire ;
- on éclaire ladite surface par tout dispositif d'éclairage placé du même côté de l'objet que la caméra, et on analyse la seule image de la surface de l'objet à l'intérieur du contour mis en mémoire, en comptabilisant le nombre de pixels pour tout niveau de noir, de gris et de blanc donné, afin d'obtenir l'histogramme de contraste de ladite surface, et on en déduit par toute méthode de corrélation connue la caractéristique physique de l'objet que l'on veut mesurer.

Dans un mode préférentiel de réalisation, on analyse ladite image complète, du fond et de la surface non éclairée, à partir du centre de cette image et au moins par quart, et on balaye chacun de ceux-ci jusqu'à atteindre des points de valeur de gris correspondant à un seuil donné déterminé en fonction dudit fond connu et donnant la limite dudit contour de l'objet.

De plus, on peut analyser l'histogramme de l'image de la surface de l'objet en supprimant une zone intermédiaire comprise entre deux valeurs de niveau de gris, choisies en fonction de l'objet à mesurer, et en considérant la partie de l'histogramme située en-dessous de cette zone comme représentative de la partie foncée de la surface et celle située au-dessus représentative de la partie claire de ladite surface. Les deux dites valeurs de niveau de gris, délimitant la zone intermédiaire, peuvent être déterminés à partir d'un objet étalon ou par tout autre procédé.

Une autre solution aux problèmes posés est un dispositif de mesure de caractéristiques physiques d'objet par détermination des valeurs de contraste visuel de sa surface, comprenant les différents équipements indiqués ci-dessus et tels que décrits ci-après, avec également un système d'analyse de l'image saisie par ladite caméra, et comprenant une unité centrale de calcul et de commande desdits éclairages de l'objet, programmée pour réaliser les différentes étapes du procédé telles que définies ci-dessus.

Le résultat est de nouveaux procédés et dispositifs de mesure de caractéristiques physiques d'objets à partir des valeurs de contraste visuel de leur surface, comme ce qui est recherché dans l'application principale citée précédemment, pour évaluer le niveau de maturité d'un fruit ou d'un légume, en particulier des pommes par la méthode du "test-iode" ; cependant, la présente invention peut être également utilisable pour évaluer d'autres caractéristiques physiques de fruits ou de légumes, et même d'autres objets, dans la mesure où ces caractéristiques seraient corrélables avec la mesure du contraste de coloration de la surface de l'objet, qui peut être celle d'une partie interne coupée de celui-ci dans le cas des fruits ou des légumes, ou de la surface externe de celui-ci si ladite caractéristique est visible extérieurement.

Le procédé et le dispositif suivant l'invention répondent aux différents problèmes cités précédemment et pour lequel les équipements et les procédés actuels ne permettent pas de répondre avec satisfaction.

En effet, dans la présente invention, on distingue et on effectue deux saisies d'images : la première permet de déterminer le contour de l'objet avec précision par rapport au fond et avec une bonne définition, sans avoir à tenir compte du contraste propre à l'objet, par le seul éclairage arrière ; puis lors de la deuxième analyse de l'image, uniquement alors centrée à l'intérieur du contour ainsi défini, on n'a plus besoin de tenir compte de la référence du fond et on peut alors pousser le contraste, à la fois par l'éclairage et par la caméra elle-même pour augmenter la qualité et la fiabilité des rapports de surface contrastés au sein de la seule image que l'on veut analyser : on obtient ainsi une très bonne qualité de mesure, une stabilité, une fiabilité et une répétitivité de celle-ci avec une variation pour une même référence de surface de quelques pourcentages seulement au lieu de plus de 10% que l'on obtient à ce jour par les procédés et les dispositifs connus.

De plus, grâce à la possibilité de pouvoir étalonner chaque dispositif avec un objet étalon qui permet de définir les deux valeurs de seuils délimitant d'une part les pixels que l'on qualifie de noir, et d'autre part les blancs, on peut obtenir une mesure identique, pour une même surface entre plusieurs appareils, quelles que soient les spécificités de chacun, dont on note souvent des différences d'éclairage d'un appareil à l'autre, ainsi que des caméras de caractéristiques différentes.

Une fois l'étalonnage établi et les seuils déterminés, c'est ensuite l'ouverture de l'iris de la caméra qui compense les variations dues aux variétés d'objets, car même dans le cadre des pommes, chaque variété peut avoir des valeurs de contraste différent ; de plus, l'éclairage, même pour un même dispositif, peut varier dans le temps ; on améliore ainsi d'autant plus la fiabilité de la mesure.

L'éclairage intermittent, qui est soit d'un côté soit de l'autre de l'objet, ne nécessite pas une grosse puissance électrique, ce qui permet d'obtenir un équipement portable ne nécessitant pas plus d'éclairage que dans les dispositifs actuels.

La présente invention peut être également utilisée pour compter éventuellement plusieurs objets disposés sur ladite plaque support translucide, dans une application de type analyse microscopique par exemple, pour laquelle la première saisie de l'image par éclairage arrière permettrait de compter lesdits objets, et la deuxième analyse d'image par éclairage avant, de les analyser chacun séparément et de les comparer entre eux par exemple.

On pourrait citer d'autres avantages de la présente invention, mais ceux cités ci-dessus en démontrent déjà suffisamment la nouveauté et l'intérêt. La description et les figures ci-après représentent un exemple de réalisation de l'invention mais n'ont aucun caractère limitatif : d'autres réalisations sont possibles dans le cadre de la portée de l'étendue de cette invention, en particulier en changeant la forme du boîtier enfermant le dispositif et en l'appliquant à divers types d'objets que l'on veut analyser ; de même il peut être envisagé d'inverser la position de la caméra par rapport à l'objet qui pourrait se trouver en-dessous de la plaque au lieu d'être situé au-dessus : cette position est cependant préférée puisque elle permet de maintenir l'objet contre la plaque translucide par son seul poids.

La figure 1 est une vue en coupe verticale simplifiée d'un dispositif suivant l'invention.

La figure 2 est une vue de dessous en coupe dans un plan perpendiculaire à la figure 1 du même dispositif, et au niveau des éclairages inférieurs.

La figure 3 est une représentation d'un histogramme obtenu en utilisant le procédé et le dispositif suivant l'invention en comparaison avec celui obtenu avec un procédé et dispositif actuel.

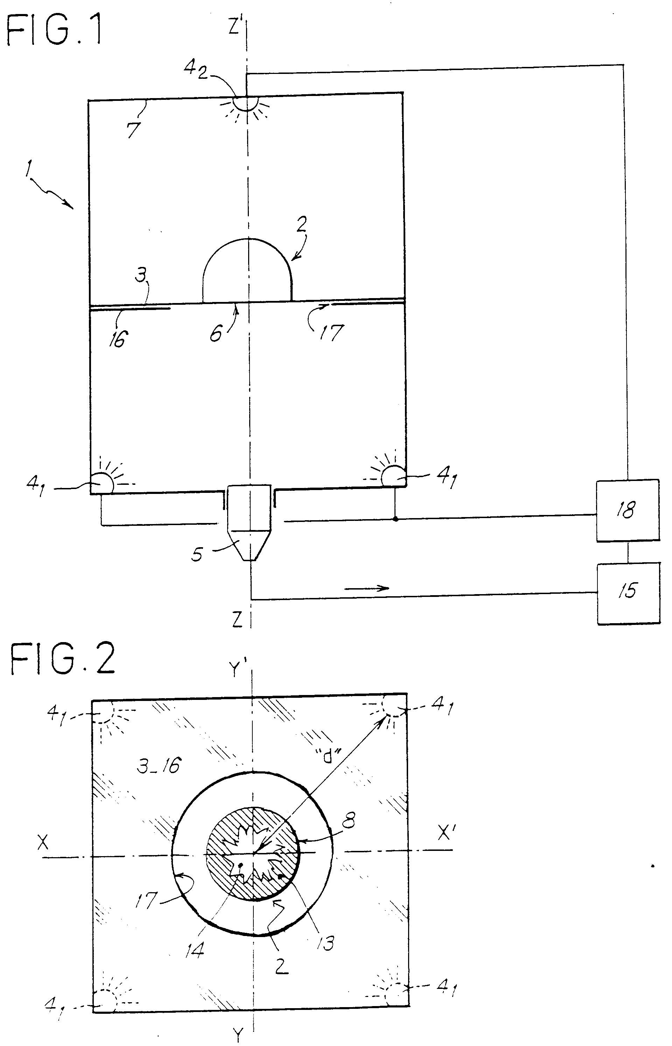

Le dispositif de mesure tel que représenté dans les figures 1 et 2 comprend un boîtier fermé 1 séparé en deux parties par une plaque translucide 3 et pouvant recevoir ledit objet 2 ; lequel boîtier isole celui-ci de toute lumière parasite extérieure et comporte un fond 7 en arrière dudit objet, et de niveau de blanc connu, au moins un dispositif d'éclairage 4 dudit objet 2 et une caméra 5 placée du côté opposé à cet objet 2 par rapport à ladite plaque 3.

Le dispositif d'analyse suivant l'invention comporte au moins deux systèmes d'éclairage, dont l'un 4₂ est placé derrière l'objet 2 par rapport à ladite caméra 5, de telle façon que la surface 6 de l'objet faisant face à celle-ci ne soit pas éclairé par ce premier dispositif ou système 4₂, et l'autre 4₁ est placé du même côté par rapport à l'objet 2 que la caméra 5, de telle façon qu'il éclaire ladite surface 6 de l'objet ; et un dispositif 18 de commande des deux dits éclairages alimente un seul éclairage en même temps et successivement.

D'une manière préférentielle, la surface de ladite plaque translucide 3 faisant face à la caméra 5 est recouverte d'un écran 16 de couleur foncée, tel que du noir, comprenant une ouverture 17 d'un diamètre supérieur à celui des objets 2 à mesurer, et de préférence centrée autour du milieu de la plaque dans l'axe zz' de la caméra et de l'éclairage 4₂.

Ledit dispositif d'éclairage 4₁ situé du même côté de la caméra 5 par rapport à l'objet est situé à une distance d suffisante de l'axe zz' de vision de la caméra 5 pour que les rayons lumineux provenant dudit éclairage 4 et réfléchis directement sur la surface de la plaque translucide 6 de l'ouverture 1₇ n'éclairent pas ladite caméra 5.

Pour obtenir une distance "d", indiquée ci-dessus, optimum, surtout dans le cadre de la réalisation d'un boîtier 1 de forme cylindrique à axe vertical zz' de section rectangulaire et de préférence carrée, lesdits éclairages 4₁ sont situés dans les angles inférieurs dudit boîtier 1, et donc de préférence en nombre de quatre.

On peut alors éclairer l'objet 2 par le dispositif d'éclairage 4₂, qui peut être une seule source d'éclairage située dans l'axe zz' au-dessus de l'objet 2 par rapport à la caméra 5, les éclairages inférieures 4₁ étant éteints, et la surface 6 de l'objet faisant face à ladite caméra n'est alors pas éclairée : l'image prise par la caméra 5 permet de bien distinguer et analyser le contour 8 de la surface 6 par rapport au fond 7 et de mettre en mémoire les limites de ce contour, représenté par des pixels de changements de niveau de noir, pour la mesure suivante.

Celle-ci s'effectue en effet avec un éclairage de la surface 6 par uniquement les dispositifs d'éclairage 4₁ inférieurs, l'éclairage 4₂ pouvant être éteint, et l'analyse de l'image ainsi recueillie peut être faite uniquement à l'intérieur de ce contour 8 : il ne s'y reflète aucun objet du fait de la disposition particulière des éclairages 4₁ par rapport à la caméra 5 et de l'écran noir 16 qui permet de ne pas avoir de réflexion parasites.

L'analyse de la première image permettant de déterminer le contour de l'objet par rapport à la caméra 5 en partant du centre de l'image complète saisie initialement par celle-ci jusqu'à obtenir un changement de niveau de gris suffisant pour être sûr qu'il s'agit du contour, permet de pouvoir positionner l'objet sans qu'il ait été posé avec précision par rapport à l'axe zz' : ceci permet d'accélérer les mesures car on n'est pas obligé de vérifier suivant le procédé de la présente invention, la position centrale de l'objet par rapport à cet axe, alors que les dispositifs et procédés actuels nécessitent un centrage optimum.

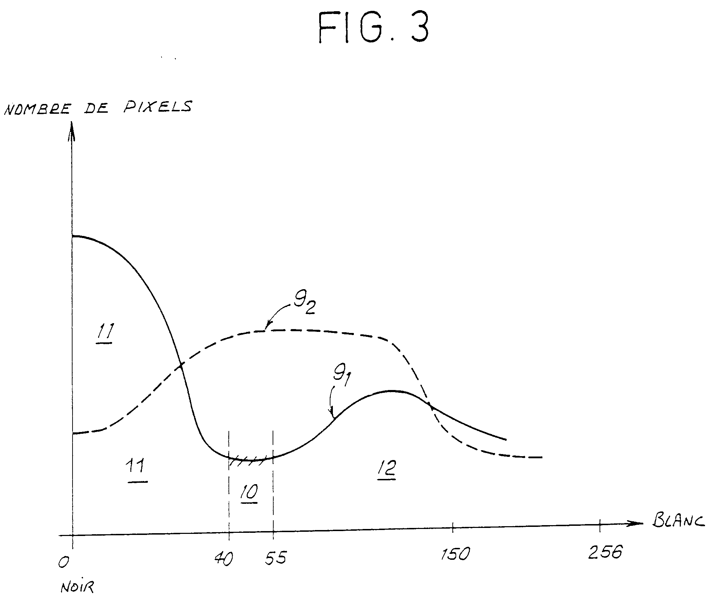

Sur la figure 3 sont représentées deux courbes d'histogrammes : celle indiquée 9₂ en forme de cloche est de type de celles obtenues à ce jour par les dispositifs connus, dans lesquels on essaie de trouver dans la même image un compromis de contraste pour à la fois déterminer le contour de l'objet et l'histogramme 9₂ de la surface de l'objet à l'intérieur de ce contour, mais donc au détriment du contraste entre les blancs et les noirs : on favorise alors l'émergence de gris moyen qui rend difficile l'interprétation de la mesure, car la zone 10 dans laquelle on veut éliminer alors ces gris moyens, frontières entre les noirs et les blancs, est difficile à déterminer et très importante ; la mesure du contraste n'est donc pas très fiable.

Des mesures réalisées grâce au procédé et au dispositif de l'invention permettent d'obtenir un histogramme de la forme de la courbe 9₁ dans lequel les noirs, à la partie gauche représentant la zone 11, et les blancs, à la partie droite représentant la zone 12, sont bien représentatifs respectivement des zones colorées et non colorées, avec une zone intermédiaire 10 assez étroite, et qui peut de plus être déterminée par un objet étalon de départ ; par exemple cette zone 10 peut être comprise entre deux seuils 40 et 55 sur l'échelle de référence qui part des noirs qui correspondent à la valeur zéro jusqu'au blanc pur correspondant à la valeur 256, mais dans la plupart des mesures on obtient des blancs au maximum de valeur 150.

En ordonnées est figuré le nombre de pixels ou points image que l'on comptabilise pour chaque valeur ou niveau de blancs et de noirs de l'image de l'objet 6 à l'intérieur du contour 8.

On peut alors considérer d'une manière très précise que la partie 11 de l'histogramme est bien représentative de la partie 13 foncée de la surface 6 de l'objet tel que représenté sur la figure 2, et la partie 12 située au-dessus du seuil de la zone 10 représentative de la partie claire 14 de la surface 6 de l'objet 2 : leur rapport donne alors une valeur de contraste très précise permettant une bonne détermination de la caractéristique physique de l'objet liée à cette valeur.

## Revendications

1. Procédé de mesure de caractéristiques physiques d'objet (2) par détermination des valeurs de contraste visuel de sa surface (6), lequel objet (2) étant disposé dans un boîtier fermé (1) isolant celui-ci de toute lumière parasite extérieure, en avant d'un fond (7) de niveau de blanc connu, et contre une plaque translucide (3), lequel boîtier (1) comporte au moins un dispositif d'éclairage (4) dudit objet (2) et une caméra (5) placée du côté opposé à cet objet (2) par rapport à ladite plaque (3), caractérisé en ce que :
- on éclaire l'objet (2) par tout dispositif d'éclairage (4₂) placé derrière celui-ci par rapport à ladite caméra (5), de telle façon que la surface (6) de l'objet faisant face à celle-ci, ne soit pas éclairée ;
- on analyse l'image complète saisie par ladite caméra (5), du fond (7) et de la surface (6) de l'objet à travers la plaque (3) par comparaison de la valeur du niveau de gris de tout pixel de cette image par rapport à celui du fond connu (7) et on détermine le contour (8) exact de cette surface (6) que l'on met en mémoire ;
- on éclaire ladite surface (6) par tout dispositif d'éclairage (4₁) placé du même côté de l'objet (2) que la caméra (5), et on analyse la seule image de la surface (6) de l'objet à l'intérieur du contour (8) mis en mémoire, en comptabilisant le nombre de pixels pour tout niveau de noir, de gris et de blanc donné, afin d'obtenir l'histogramme (9) de contraste de ladite surface (6), et on déduit par toute méthode connue de corrélation la caractéristique physique de l'objet (2) que l'on veut mesurer.

2. Procédé de mesure suivant la revendication 1, caractérisé en ce qu'on analyse ladite image, complète du fond (7) et de la surface (6) non éclairée, à partir du centre de cette image et au moins par quart, et on balaye chacun de ceux-ci jusqu'à atteindre des points de valeur de gris correspondant à un seuil donné, déterminé en fonction du fond connu (7) et donnant la limite dudit contour (8).

3. Procédé de mesure suivant l'une quelconque des revendications 1 et 2, caractérisé en ce qu'on analyse l'histogramme (9) de l'image de la surface (6) de l'objet en supprimant une zone (10) intermédiaire comprise entre deux valeurs de niveau de gris, choisies en fonction de l'objet (2) à mesurer, et en considérant la partie (11) de l'histogramme située en-dessous de cette zone (10) comme représentative de la partie (13) foncée de la surface (6) et celle (12) située au-dessus représentative de la partie claire (14) de ladite surface (6).

4. Procédé de mesure suivant la revendication 3, caractérisé en ce que les deux dites valeurs de niveau de gris délimitant la zone (10) intermédiaire, sont déterminées à partir d'un objet étalon.

5. Dispositif de mesure de caractéristiques physiques d'objet (2) par détermination des valeurs de contraste visuel de sa surface (6), comprenant un boîtier fermé (1) séparé en deux parties par une plaque translucide (3), et pouvant recevoir ledit objet (2), lequel boîtier isole celui-ci de toute lumière parasite extérieure et comporte un fond (7), en arrière dudit objet et de niveau de blanc connu, au moins un dispositif d'éclairage (4) dudit objet (2) et une caméra (5) placée du côté opposé à cet objet (2) par rapport à ladite plaque (3), caractérisé en ce qu'il comporte au moins deux dispositifs d'éclairage, dont l'un (4₂) est placé derrière l'objet (2) par rapport à ladite caméra (5), de telle façon que la surface (6) de l'objet faisant face à celle-ci ne soit pas éclairé par ce dispositif (4₂), et l'autre (4₁) est placé du même côté par rapport à l'objet (2) que la caméra (5), de telle façon qu'il éclaire ladite surface (6) de l'objet et un dispositif (18) de commande des deux dits éclairages, alimentant un seul éclairage en même temps et successivement.

6. Dispositif de mesure suivant la revendication 5, caractérisé en ce que la surface de ladite plaque translucide (3) faisant face à la caméra (5) est recouverte d'un écran de couleur foncée (16), comprenant une ouverture (17) d'un diamètre supérieur à celui des objets (2) à mesurer.

7. Dispositif suivant la revendication 6, caractérisé en ce que ledit dispositif d'éclairage (4₁) situé du même côté que la caméra (5) par rapport à l'objet (2) est situé à une distance (d) suffisante de l'axe zz' de vision de la caméra (5) pour que les rayons lumineux provenant dudit éclairage et réfléchis directement sur la surface de la plaque translucide (6) de l'ouverture (17) n'éclairent pas ladite caméra (5).

8. Dispositif suivant la revendication 7, caractérisé en ce que ledit boîtier (1) est de forme cylindrique à axe vertical zz', de section rectangulaire, les éclairages (4₁) sont disposés dans les angles inférieurs de ce dit boîtier où est située également la caméra (5), et l'éclairage (4₂) est placé dans l'axe xx' à la partie supérieure dudit boîtier, ledit objet (2) étant posé au-dessus de ladite plaque translucide (3).

9. Dispositif de mesure suivant l'une quelconque des revendications 5 à 8, caractérisé en ce qu'il comporte un système d'analyse (15) de l'image saisie par la caméra (5), comportant une unité centrale de calcul et de commande desdits éclairages (4) programmée pour réaliser le procédé suivant l'une quelconque des revendications 1 à 4.
